Europäisches Patentamt

European Patent Office

Office européen des brevets

(19)

(11) Veröffentlichungsnummer: **0 412 258 A2**

# EUROPÄISCHE PATENTANMELDUNG

(12)

(21) Anmeldenummer: 90111027.0

(22) Anmeldetag: **12.06.90**

(51) Int. Cl.⁵: **B26D 1/26**, B29C 69/00, B29D 29/06

(30) Priorität: 07.08.89 DD 331536

(43) Veröffentlichungstag der Anmeldung:
**13.02.91 Patentblatt 91/07**

(84) Benannte Vertragsstaaten:
**BE DE IT SE**

(71) Anmelder: **VEB GASKOMBINAT SCHWARZE PUMPE**

**O-7610 Schwarze Pumpe(DE)**

(72) Erfinder: **Petzold, Eberhard, Dipl.-Ing.**
**W.-Seelenbinder Strasse 19**
**DDR-7580 Weisswasser(DD)**
Erfinder: **Klein, Hans**
**E.-Weinert-Strasse 14**
**DDR-7700 Hoyerswerda(DD)**
Erfinder: **Barwisch, Rainer, Dipl.-Ing.**
**Stieglitzweg 6**
**DDR-7590 Spremberg(DD)**

(54) **Vorrichtung zum Schneiden von Fördergurten, vorzugsweise von Stahlseilfördergurten.**

(57) Die Vorrichtung ist anwendbar zum Trennen der genannten Gurte bis zu einer Dicke von 40 mm bei der Herstellung sowie bei der Reparatur sowohl als stationäres Gerät in Werkstätten als auch als mobiles Gerät vor Ort.

Die Vorrichtung besteht aus einem Fahrwagen (1) mit einem fest unterhalb des zu schneidenden Fördergurtes (7) angeordneten Untermesser (6) und einem schwenkbar oberhalb des Gurtes (7) angeordneten Obermesser (5). Dabei hat das Obermesser (5) eine bogenförmige, gezahnte Schneidkante und das Untermesser (6) besitzt Einkerbungen. Der Eingriffswinkel (ι) der Zahnung des Obermessers (5) zum Gurt (7) ist kleiner 15 Grad. Der Fahrwagen (1) ist angetrieben und bewegt sich schrittweise in Schnittrichtung.

Figur 1

# VORRICHTUNG ZUM SCHNEIDEN VON FÖRDERGURTEN, VORZUGSWEISE VON STAHLSEILFÖRDERGURTEN

Die Erfindung bezieht sich auf die Bearbeitung von Fördergurten, insbesondere von Stahlseilfördergurten und ist anwendbar zum Trennen dieser Gurte bei der Herstellung und Reparatur.

Es ist in der Praxis im allgemeinen üblich, Fördergurte aus Gummi oder Kunststoffen mittels rotationssymmetrischer, scheibenförmiger Werkzeuge zu trennen. Als solche werkzeuge sind rotierende Trennmesser, Trennscheiben, Schmirgelscheiben und fräsenartige Schneidmesser bekannt. Bekannt sind zur Trennung dieser Gurte auch speziell geschärfte Schneidklingen und -messer. Alle diese Trennwerkzeuge sind für Stahlseilfördergurte nicht oder nur sehr bedingt einsetzbar, da sie für das gleichzeitige Trennen zwei so verschiedenartiger Werkstoffe, wie Gummi und Stahl, jeweils nicht geeignet sind.

Ein zusätzlicher Nachteil, vor allem der Trenn- und Schleifscheiben ist das Verursachen hoher Arbeitsplatz-und Umweltverschmutzungen. Alle genannten Werkzeuge unterliegen, vor allem beim Trennen von Stahlseilfördergurten, einem hohen Verschleiß.

In DE-OS 1779775 ist das Laserschneiden von armierten Plast- und Elastmaterialien beschrieben. Dieses Trennverfahren bedingt einen hohen Geräte- und Energieaufwand und ist nur für stationäre Anlagen praktikabel.

In DD-WP 158998 ist eine stationäre Vorrichtung zum Trennen von Stahlseil-Gummi-Fördergurten beschrieben. Dabei wird der Fördergurt vorgebogen und mittels einer Trennscheibe unter Zugabe von Schneidflüssigkeit getrennt. Diese Vorrichtung besitzt einen hohen Geräte-und Betriebsaufwand, da Schneidflüssigkeit und eine Absaugung hier notwendig sind und ein hoher Werkzeugverschleiß auftritt. Das Abtrennen schmaler Streifen ist aufgrund der notwendigen Spanneinrichtung kaum möglich. Schließlich verursacht die Vorrichtung starke Verschmutzungen sowie Rauch- und Geruchsbelästigungen.

Die Erfindung löst die Aufgabe, eine Vorrichtung zu schaffen, die sowohl im stationären als auch ortsveränderlichen Betrieb Fördergurte und insbesondere Stahlseilfördergurte schnell, mit möglichst geringen Abfällen und bei niedrigem Werkzeugverschleiß, sicher und zuverlässig trennt, ohne dabei Arbeitsplatz- und Umweltbelastung zu verursachen.

Die erfindungsgemäß Vorrichtung besteht aus einem Fahrwagen mit einem an ihm unterhalb des zu schneidenden Gurtes fest angebrachten Untermesser und einem schwenkbar an ihm oberhalb des Gurtes angebrachten Obermesser. Der Fahrwagen besitzt einen Antrieb und ist oberhalb des Gurtes geführt. Das Obermesser weist eine bogenförmig ausgeführte Schneidkante mit einer Zahnung, deren Eingriffswinkel kleiner 15 Grad ist, auf. Das Untermesser besitzt an seiner Schneidekante Einkerbungen.

Während des Schneidevorganges bewegt sich der Fahrwagen schrittweise in Schnittrichtung. Dabei erfolgt das Schneiden nur während der Stillstandsphase des Fahrwagens und während der Bewegung des Fahrwagens ist das obermesser nach oben geschwenkt. Beim Schneiden muß die Reibungskraft zwischen den Schneiden des Ober- und Untermessers einerseits und dem Gurt andererseits größer sein als die Rückstellkraft der Messer, um ein Herausschieben des nicht verspannten Gurtes in Schnittrichtung zu vermeiden. Um diese Bedingung zu erfüllen, wird erfindungsgemäß der Eingriffswinkel des Obermessers in den Gurt unter 15 Grad gewählt und damit eine geringe Rückstellkraft der Messer erzeugt. Andererseits wird die Reibungszahl zwischen dem Gurt und dem Untermesser durch die Einkerbungen im Untermesser vergrößert.

Um den Eingriffswinkel des Obermessers in den Gurt auf einem bestimmten, annähernd konstanten Wert unabhängig vom Schwenkwinkel des Obermessers zu halten, ist dessen Scheidkante bogenförmig gestaltet und verzahnt.

Mit der Erfindungsgemäßen Lösung ist es möglich, Stahl-seilfördergurte bis zu einer Dicke von 40 mm ohne Abfall, bei relativ geringem Werkzeugverschleiß und ohne jede Verschmutzung sowie Arbeitsplatz- und Umweltbelastung zu trennen. Dabei ist ein Spannen oder Festklemmen des Fördergurtes zur Aufnahme der Rückstellkraft der Messer nicht erforderlich und ein schnelles Trennen des Gurtes möglich. Die Vorrichtung kann sowohl im stationären Werkstattbetrieb als auch im ortveränderlichen Montage- und Reparaturbetrieb problemlos angewandt werden.

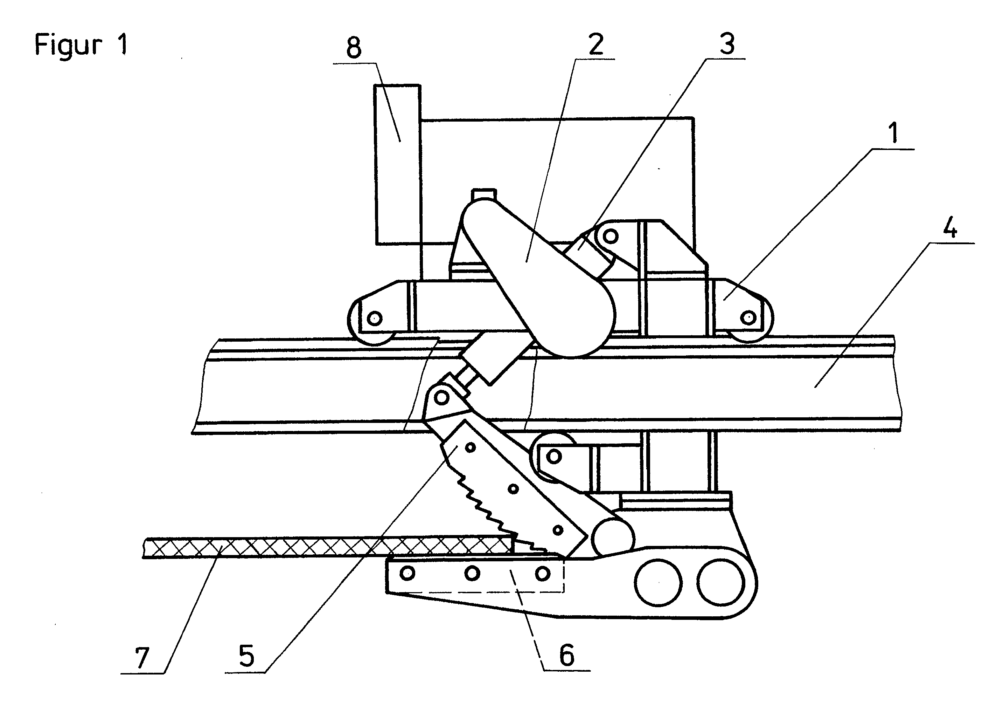

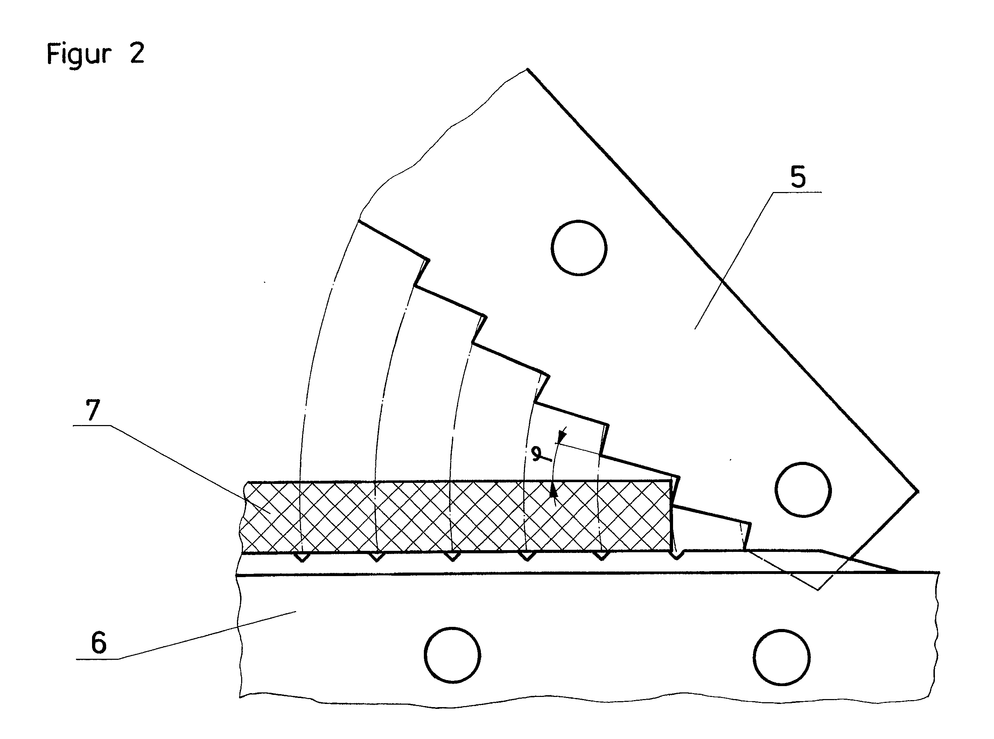

Die Erfindung soll am folgenden Beispiel einer Schneidvorrichtung für Stahlseilfördergurte erläutert werden. Dazu ist in Figur 1 die Seitenansicht der Schneidvorrichtung mit geöffnetem Obermesser und in Figur 2 die Schneidengeometrie des Ober- und Untermessers dargestellt.

Die erfindungsgemäße Vorrichtung besteht aus einem Fahrwagen 1, der durch Schienen 4 oberhalb des Fördergurtes 7 geführt wird und eine Fahrbewegung quer zur Fördergurtlängsachse ausführen kann.

Der Fahrwagen 1 besitzt einen Fahrantrieb 2; die Kraftübertragung erfolgt über Getriebebremsmotor, Kettentrieb, Anlaufkupplung, Ritzel auf eine Zahnstange. Am Fahrwagen 1 ist die Schneideinrichtung angebracht, die aus dem starren Untermesser 6 und dem schwenkbar gelagerten Obermesser 5 besteht. Die Kraft für die Schwenkbewegung des Obermessers wird durch einen hydraulischen Arbeitszylinder 3 aufgebracht. Das Hydraulikaggregat 8 befindet sich auf dem Fahrwagen 1. Der Fördergurt 7 ist entlang der Schneidlinie mittels eines Balkens über die gesamte Breite gegen eine feste Auflagekante gespannt.

Das Trennen des Fördergurtes wird eingeleitet, indem der Fahrwagen 1 mit geöffneter Schneideinrichtung an die Gurtkante gefahren wird. Der erste Teilschnitt erfolgt durch Ausfahren des Arbeitszylinder 3 und damit der Abwärtsbewegung des Obermessers 5. Das Obermesser 5 ist so gestaltet, daß aufgrund der Messerform und der Schneidengeometrie die Rückstellkräfte beim Schnittvorgang kleiner als die Reibungskräfte zwischen den Messern und dem Gurt sind. Das Obermesser 5 hat daher eine Zahnung auf einer bogenförmig ausgeführten Schneide, wodurch jeder Teilschnitt in mehrere Schnittstufen aufgeteilt wird und die Eingriffsverhältnisse des Obermessers 5 in den Fördergurt 7 bei jeder Schnittstufe annähernd gleich sind. Der Eingriffswinkel $\iota \leq 15$ Grad gewährleistet eine geringe Rückstellkraft der Messer 5 und 6 und mit den Einkerbungen im Untermesser 6 wird die der Rückstellkraft entgegenwirkende Reibungskraft vergrößert. Auf diese Weise wird das zu schneidende Material nicht durch die Keilwirkung des Obermessers 5 aus der Schere geschoben.

Die Schneidlänge eines Teilschnittes beträgt ca. 180 mm. Danach wird die Schere geöffnet und der Fahrwagen 1 rückt um die Schneidlänge vor und der Schnittvorgang wird erneut eingeleitet. Dieser Vorgang wiederholt sich so oft, bis die gesamte Gurtbreite durchfahren ist. Die Schnittzeit für einen 2500 mm breiten Fördergurt beträgt ca. 3 min, die Rückfahrt des Wagens in die Ausgangsstellung ca. 1 min. Es können Stahlseilfördergurte bis max. 40 mm Dicke geschnitten werden.

**Ansprüche**

1. Vorrichtung zum Schneiden von Fördergurten, vorzugsweise von Stahlseilfördergurten bis zu einer Dicke von 40 mm mittels eines unterhalb des Gurtes (7) fest angeordneten Umtermessers (6) und eines oberhalb des Gurtes (7) schwenkbar angeordneten Obermessers (5), gekennzeichnet dadurch, daß das Unter-und das Obermesser (5, 6) an einem angetriebenen, sich schrittweise in Schnittrichtung bewegenden Fahrwagen (1), der oberhalb des zu schneidenden Gurtes (7) geführt ist, befestigt sind, daß das Obermesser (5) eine bogenförmig ausgeführte gezahnte Schneidkante aufweist, daß der Eingriffswinkel ($\iota$) dieser Zahnung zum zu schneidenden Gurt (7) kleiner 15 Grad ist und daß das Untermesser (6) Einkerbungen aufweist.

Figur 1

EP 0 412 258 A2

Figur 2